(19) Europäisches Patentamt

European Patent Office

Office européen des brevets

(11) EP 1 358 765 B1

(12) EUROPEAN PATENT SPECIFICATION

(45) Date of publication and mention
of the grant of the patent:
**27.12.2006 Bulletin 2006/52**

(21) Application number: **02715548.0**

(22) Date of filing: **23.01.2002**

(51) Int Cl.:
*H04N 9/31* (2006.01)    *H04N 5/74* (2006.01)

(86) International application number:
**PCT/GB2002/000265**

(87) International publication number:
**WO 2002/060187 (01.08.2002 Gazette 2002/31)**

(54) **CORRECTION OPTICS FOR FLAT-PANEL DISPLAYS**

KORREKTUROPTIK FÜR FLACHANZEIGEN

DISPOSITIF OPTIQUE DE CORRECTION POUR ECRANS PLATS

(84) Designated Contracting States:
**DE FR GB**

(30) Priority: **23.01.2001 GB 0101682**

(43) Date of publication of application:
**05.11.2003 Bulletin 2003/45**

(73) Proprietor: **Cambridge Flat Projection Displays Limited**
**Fenstanton, Cambridgeshire PE28 9JQ (GB)**

(72) Inventors:
 • **TRAVIS, Adrian Robert Leigh**
  **Wrangaton,**
  **South Devon TQ10 9HH (GB)**

 • **MOORE, John Richard**
  **Cambridge CB3 7AZ (GB)**

(74) Representative: **Gibbs, Christopher Stephen**
**HASELTINE LAKE**
**Imperial House**
**15-19 Kingsway**
**London WC2B 6UD (GB)**

(56) References cited:
 • **PATENT ABSTRACTS OF JAPAN vol. 1997, no. 02, 28 February 1997 (1997-02-28) & JP 08 271739 A (KOIKE YASUHIRO;NITTO JUSHI KOGYO KK), 18 October 1996 (1996-10-18)**

**Description**

This invention is concerned with a way of correcting image distortion in a flat-panel display in which the image is projected from a microdisplay into a tapered transparent slab.

Flat-panel displays which have screens large enough to stimulate the quick reactions of our peripheral vision will give pictures great immediacy, yet because they are flat the displays will fit easily onto the wall of a room. The size of conventional flat-panel displays however is limited by the resistance-capacitance product of the row and column transparent conductors, and by the area over which lithography can be sufficiently precise to make transistors. The cost of making active-matrix liquid-crystal displays with screen diagonals greater than one meter is prohibitive, and even the cheaper plasma displays are too expensive for most uses. However, the 2" by 2" liquid-crystal displays used in video projectors are relatively cheap, while fingernail-sized microdisplays look set to cost only a few dollars.

Video projectors comprise a two-dimensional display, a projection lens and a translucent screen, and the projection lens forms on the translucent screen a magnified image of the two-dimensional display which can be almost as big as one wants. Video projectors are cheap so are becoming increasingly popular, but if the projector is pointed at the front of the translucent screen then often the projector gets in the way of the viewer, or the viewer gets in the way of the projected light. Furthermore unless the room lights are dimmed, the image looks washed out because the screen scatters background light as well as the projected image. The projector can instead be pointed at the rear of the screen so that there is nothing between the viewer and the screen, and the screen made to scatter only light incident on its rear, but rear-projection displays are bulky.

Recently there was disclosed in the applicant's WO 01/72037 a tapered display which comprises a video projector and a slim wedge of glass or transparent plastic. The video projector itself comprises of a source of approximately collimated illumination, a microdisplay, a condensing lens and a projection lens. As the rays leave the projection lens they form a narrow waist. At this point the rays are passed into the thick end of the wedge. When a ray is shone into the thick end of a slim wedge, then the out-of-plane angle measured with respect to one face of the wedge will change each time the ray reflects of the opposite face of the wedge. Eventually the ray propagates far enough along the wedge that the out-of-plane angle becomes greater than the critical angle, and at this point light escapes the wedge. The distance into the wedge at which the ray leaves the wedge is therefore determined by the angle at which the ray is injected. In this way the 2D array of pixels on the microdisplay is mapped one-to-one to a 2D array of pixels on the face of the wedge. An anti-reflection coating is desirable to ensure that all the light leaves the screen when the ray reaches the critical angle, since otherwise there is blurring between adjacent rows of the image.

The tapered display shares many of the advantages of a rear-screen projection display, but the projected image gets separated into horizontal bands separated by dark gaps or bands because there is no light emerging at the points where the light changes from n internal reflections to $n + l$ reflections.

The invention is defined in claim 1, to which reference can now be made. Embodiments of the invention have a spacing between waveguide and screen in order to eliminate gaps or bands in the image.

This spacing or gap should generally be proportional in height to the thickness of the tapered waveguide at that point. The gap need not be air: it could be filled with a solid or gel of the right optical qualities. This could act as a spacer to support the screen, particularly for larger displays. Otherwise the holding means could be a set of spacers around the edge of the screen, or over the area of the screen.

The projection apparatus may also include a flat input slab waveguide, and a tapered output slab waveguide arranged to receive light from the input waveguide after having been expanded in its plane, in which the transition from the input waveguide to the tapered waveguide is gradual.

For a better understanding of the invention, embodiments will now be described by way of example with reference to the accompanying drawings, in which:

Figures 1 to 4 illustrate the basic options of the tapered waveguide system;
Figure 5 shows the principle behind the invention;
Figures 6 and 7 are graphs showing the effects of projection across the spacing between waveguide and screen;
Figure 8 shows a second embodiment in which a prismatic film is inserted between the tapered transparent slab and the translucent screen in order to eliminate gaps without distortion;
Figures 9 and 9a show a third embodiment in which the rate of change of thickness into the tapered slab is varied from zero to the desired taper angle without causing aberrations in the final image by making the transition gradual;
Figure 10 illustrates a cylindrical Dyson lens which can be used to fold the system;
Figure 11 illustrates a graded-index curve which can be used to fold the system;
Figure 12 shows how the image from the video projector can be both magnified and compactly folded within the system;
Figure 13 shows how a wedge, space, holographic optical element and liquid-crystal display can be used as a compact video projector; and

Figure 14 shows how two wedges placed base to tip can be used to give flat-panel projection without folding.

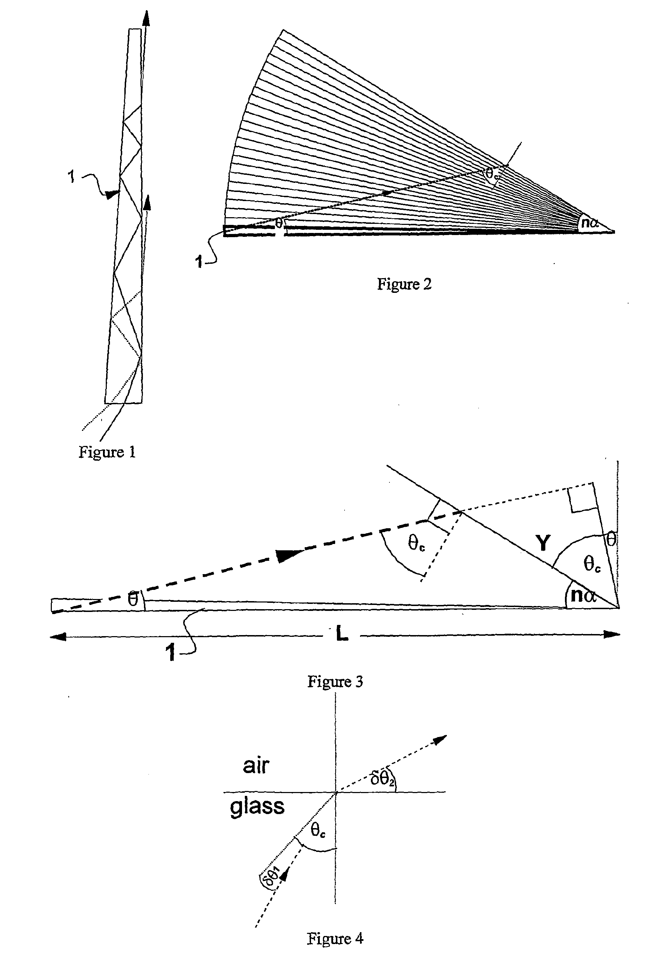

**Figures 1 to 3** show the principle of operation of the wedge-shaped waveguide display, as explained in WO 01/72037. Figure 1 illustrates how the distance which a ray of light propagates along a tapered transparent slab is determined by the angle at which the ray is injected. Figure 2 illustrates how the passage of a ray through the tapered slab can be found by tracing a straight ray through mirror images of the tapered slab. Figure 3 illustrates the trigonometry, of Figure 2 for an average ray. **Figure 4** shows how when a ray is incident on a glass/air interface at close to the critical angle, the angle of emergence is approximately the square root of twice the angle of incidence, as can be easily shown using Snell's Law.

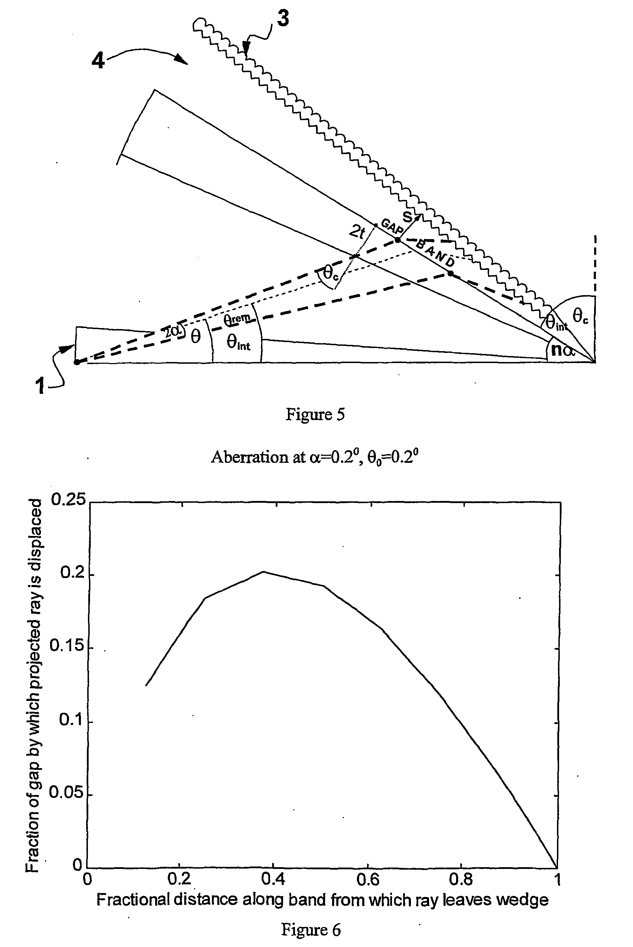

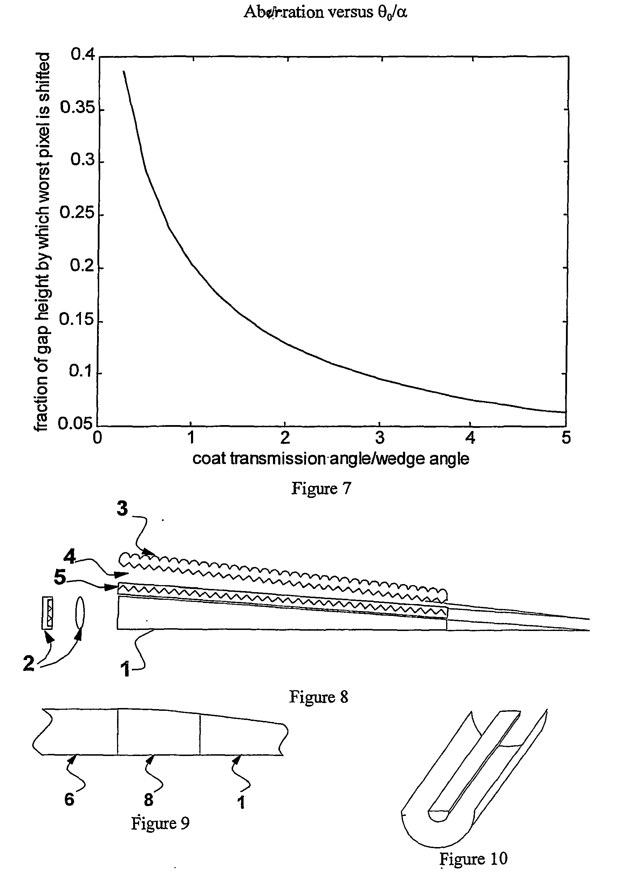

**Figure 5** shows the principle behind the present invention, by analogy with Figure 3. A screen 3 is placed over the slab with a gap 4, with a tapered gap between it and the slab. Figure 5 shows schematically how rays traced through mirror images of the tapered slab so as to form at the last surface a horizontal band, can be expanded to fill the adjacent gap by creating a space between the tapered transparent slab and the translucent screen (The physical setup is similar to that shown in Figure 8 discussed below).

The tapered transparent slab 1 is configured as a wedge with an anti-reflection coating on one surface, and into its thick end is pointed a video projector 2. The gaps between the bands into which the projected image is divided are eliminated by placing a translucent screen 3 adjacent to the coated surface of the tapered transparent slab, and providing a space 4 between slab and screen so that the planes formed by the bottom of the screen and the two surfaces of the wedge will, if all extended, meet at a common line. The angle $\sigma$ between the translucent screen and adjacent wedge surface should be:

$$\sigma = \alpha \frac{2\sqrt{2}\left(n^2 - 1\right)^{-1/4}}{\dfrac{1}{\sqrt{\theta_0}} - \dfrac{1}{\sqrt{\theta_0 + 2\alpha}}}$$

where n is the refractive index of the wedge, $\alpha$ is the angle of taper of the wedge, and $\theta_0$ is the angle by which a ray's incident angle must be less than the critical angle if it is to be substantially (say 50%) transmitted by the glass/air interface next to the translucent screen.

For tapered transparent slabs whose taper profile is different from that of a wedge but varies smoothly, the translucent screen should be shaped so that the thickness of the space s between screen and slab surface at any point is proportional to the thickness t of the wedge next to that point. The constant of proportionality is given by:

$$s \approx 2t \frac{1}{\sqrt{n^2 - 1}} \left( \frac{1}{\sqrt{2\theta_0}\sqrt{n^2 - 1}} - \frac{1}{\sqrt{2\left(\theta_0 + \alpha\right)}\sqrt{n^2 - 1}} \right)^{-1}$$

For other shapes of transparent slab, the shape and distance of the translucent screen from the slab can be calculated in the same way as for a wedge-shaped slab, which is done as follows.

The passage of a typical ray reflecting off the glass/air interfaces of the wedge is found either by using a ray-tracing algorithm, or by considering the optical equivalent of tracing a straight ray through a stack of wedges of length L as is done in Figure 3. When the ray hits an interface at slightly less than the critical angle $\theta_c$ it emerges, and the average distance Y from the tip of the tapered slab at which the ray emerges can be related to the angle $\theta$ at which the ray was injected by applying trigonometry to Figure 3:

$$\frac{Y\cos\theta_c}{L} = \sin\theta$$

However, this is only the average distance, for the following reason. When a ray is incident on an image of the glass/air interface at just greater than the critical angle, reflection of the ray is depicted by tracing it through to the next image of the glass/air interface. This represents the side of the wedge which typically has no anti-reflection coating, so the ray is traced on to the next image at which it terminates by emerging from the wedge. While undergoing this double bounce the ray has moved some distance along the wedge, and it is at this section of the wedge where a gap appears in the projected image.

When a ray emerges from the wedge, its angle $\delta\theta_2$ to the wedge surface is determined by its angle $\delta\theta_1$ relative to the critical angle before the ray emerged from the wedge, as shown in Figure 4. The relationship is:

$$\delta\theta_2 = \cos^{-1}\left(n\sin\left(\theta_c - \delta\theta_1\right)\right)$$

which can be approximated as follows:

$$\frac{1}{n}\cos(\delta\theta_1) - \sqrt{1 - \frac{1}{n^2}}\sin(\delta\theta_1) = \frac{1}{n}\cos(\delta\theta_2)$$

$$-\sqrt{n^2 - 1}\,\delta\theta_1 \approx -\left(\delta\theta_2\right)^2/2$$

$$\delta\theta_2 \approx \sqrt{2\delta\theta_1\sqrt{n^2 - 1}}$$

If for example the ray is incident at 0.05° less than the critical angle in a glass of refractive index 1.5, then the ray emerges at an angle of 2.53° to the wedge surface. Other angles of incidence will result in other angles of emission as follows:

| n=1.5 | n=1 |
|---|---|
| $\delta\theta_1$ | $\delta\theta_2$ |
| 0.05 | 2.53 |
| 0.10 | 3.58 |
| 0.15 | 4.39 |
| 0.20 | 5.07 |
| 0.25 | 5.67 |
| 0.30 | 6.21 |
| 0.35 | 6.71 |
| 0.40 | 7.17 |
| 0.45 | 7.61 |

If a space is present between the translucent screen and the wedge-shaped waveguide, the bundle of rays within one horizontal band is projected across the space so as to fill the adjacent gap, as shown in Figure 5. The height of the gap is equal to twice the thickness t of the tapered transparent slab at that point times the tangent of the critical angle. Furthermore the range of incident angles within the bundle of rays is equal to twice the angle of wedge taper $\alpha$; rays outside this range will undergo either one bounce fewer or one bounce more. If the greatest incident angle within the ray bundle is $\theta_0$ less than the critical angle, then the thickness s of the space between the tapered transparent slab and the translucent screen should be:

$$s = 2t\tan\theta_c \left( \frac{1}{\tan\left(\cos^{-1}\left(n\sin\left(\theta_c - \theta_0\right)\right)\right)} - \frac{1}{\tan\left(\cos^{-1}\left(n\sin\left(\theta_c - \theta_0 - 2\alpha\right)\right)\right)} \right)^{-1}$$

or more approximately:

$$s \approx 2t\frac{1}{\sqrt{n^2-1}} \left( \frac{1}{\sqrt{2\theta_0\sqrt{n^2-1}}} - \frac{1}{\sqrt{2\left(\theta_0+\alpha\right)\sqrt{n^2-1}}} \right)^{-1}$$

A conventional anti-reflection coating is designed to eliminate the reflection of any rays which are likely to be incident on the coating at angles greater than the critical angle. With such a coating $\theta_0$ should be made equal to the angle between a pair of rays illuminating adjacent pixels of the image. At coarse resolutions this is satisfactory, but the projection of rays from the slab to the screen is non-linear, so it is subject to distortion and this is unsatisfactory at fine resolutions.

In a further embodiment of the invention therefore the coating on the tapered transparent slab is designed to reflect all rays incident on the glass/air interface at an internal angle greater than the critical angle minus $\theta_0$ and to transmit all rays incident at an angle less than this, and the transition from reflection to transmission should take place over a change in ray direction of less than the angle between rays illuminating any adjacent pair of rows of pixels. This design can be done using a ray-tracing or coating-design algorithm in the same way as is described in WO 01/72037. For less than 10% distortion, $\theta_0$ should equal $\alpha$, the angle of taper of the wedge. For other factors of distortion, $\theta_0$ is found as follows.

The angle $\theta$ of each ray may be written as the sum of two parts:

$$\theta = \theta_{\text{int}} + \theta_{rem}$$

where $\theta_{rem}$ is the greatest angle by which $\theta$ can be reduced without changing the number of bounces the ray undergoes before being emitted, and $\theta_{\text{int}}$ is the angle of the ray after this reduction. Assuming that the wedge angle $\alpha$ is an integer divisor of 90°, then:

$$\theta_{rem} = rem\left[\left(\theta + \theta_c - \theta_0\right), 2\alpha\right]$$

where the rem function is the remainder after the second operand has been subtracted from the first as many times as possible without resulting in a negative number. Once a ray has emerged from the slab, it travels towards the tip of the wedge before hitting the translucent screen. The distance it travels is s/tan ($\delta\theta_2$), and since $\delta\theta_1 = \theta_{rem} + \theta_0$ for the ray, this distance is approximately

$$s\Big/ \sqrt{2\left(\theta_{rem} + \theta_0\right)\sqrt{n^2-1}} \ .$$

Now this distance is less than the distance which the ray would have travelled towards the tip had it been on the point of total transmission, which is

$$s\Big/ \sqrt{2\theta_0\sqrt{n^2-1}} \ .$$

So by exceeding the point of total transmission, the ray has undergone a net shift away from the tip of:

$$s\left(2\theta_0\sqrt{n^2-1}\right)^{-1/2} - s\left(2(\theta_{rem}+\theta_0)\sqrt{n^2-1}\right)^{-1/2}$$

Inserting our value for the space s between the slab and translucent screen, we have that the net distance moved away from the tip is:

$$gap\,\frac{\theta_0^{-1/2}-\left(\theta_{rem}+\theta_0\right)^{-1/2}}{\theta_0^{-1/2}-\left(2\alpha+\theta_0\right)^{-1/2}}$$

where *gap* is the height of the gap. This should be added to the distance at which the ray will intersect the slab, giving:

$$Y_{actual} = \frac{L}{\cos\theta_c}\sin\theta_{int} + band\,\frac{\theta_{rem}}{2\alpha} + gap\,\frac{\theta_0^{-1/2}-\left(\theta_{rem}+\theta_0\right)^{-1/2}}{\theta_0^{-1/2}-\left(2\alpha+\theta_0\right)^{-1/2}}$$

where *band* is the height of the band. Now there is a band plus gap between adjacent points where rays hit the wedge surface at the critical angle, and the difference in direction between the two rays hitting these points is twice the wedge angle. So the height of the band plus gap combined is:

$$band + gap = \frac{L}{\cos\theta_c}\left[\sin(\theta_{int}+2\alpha) - \sin\theta_{int}\right]$$

So we can rewrite the distance at which the ray intersects the slab as:

$$Y_{actual} = \frac{L}{\cos\theta_c}\left\{\sin\theta_{int} + \left[\sin(\theta_{int}+2\alpha) - \sin\theta_{int}\right]\frac{\theta_{rem}}{2\alpha}\right\} + gap\left\{\frac{\theta_0^{-1/2}-\left(\theta_{rem}+\theta_0\right)^{-1/2}}{\theta_0^{-1/2}-\left(2\alpha+\theta_0\right)^{-1/2}} - \frac{\theta_{rem}}{2\alpha}\right\}$$

Now $\theta_{rem}$ is less than $2\alpha$, which is small, so $\cos\theta_{rem}$ is approximately 1. So:

$$Y_{actual} \approx \frac{L}{\cos\theta_c}\left\{\sin\theta_{int}\cos\theta_{rem} + \cos\theta_{int}\sin2\alpha\,\frac{\theta_{rem}}{2\alpha}\right\} + gap\left\{\frac{\theta_0^{-1/2}-\left(\theta_{rem}+\theta_0\right)^{-1/2}}{\theta_0^{-1/2}-\left(2\alpha+\theta_0\right)^{-1/2}} - \frac{\theta_{rem}}{2\alpha}\right\}$$

and $\sin2\alpha \approx 2\alpha$, so:

$$Y_{actual} \approx \frac{L}{\cos\theta_c}\sin(\theta_{int}+\theta_{rem}) + gap\left\{\frac{\theta_0^{-1/2}-\left(\theta_{rem}+\theta_0\right)^{-1/2}}{\theta_0^{-1/2}-\left(2\alpha+\theta_0\right)^{-1/2}} - \frac{\theta_{rem}}{2\alpha}\right\}$$

The term on the right represents the aberration, and a plot of this shows that it peaks at a maximum. **Figure 6** plots the distance (as a fraction of the height of the adjacent gap) by which rays projected onto the translucent screen are displaced due to distortion, versus the position within the band on the surface of the tapered transparent slab from which the rays are projected. We want the peak to be as small as possible for a distortion-free image, and the position of the peak can be found by setting the differential of the right hand term to zero:

$$\frac{d}{d\theta_{rem}}\left[\frac{\theta_0^{-1/2} - \left(\theta_{rem} + \theta_0\right)^{-1/2}}{\theta_0^{-1/2} - \left(2\alpha + \theta_0\right)^{-1/2}} - \frac{\theta_{rem}}{2\alpha}\right] = \frac{\frac{1}{2}\left(\theta_{rem} + \theta_0\right)^{-3/2}}{\theta_0^{-1/2} - \left(2\alpha + \theta_0\right)^{-1/2}} - \frac{1}{2\alpha} = 0$$

so

$$\left(\theta_{rem} + \theta_0\right)^{-1/2} = \sqrt[3]{\frac{1}{\alpha}\left[\theta_0^{-1/2} - \left(2\alpha + \theta_0\right)^{-1/2}\right]}$$

and:

$$\theta_{rem} = \alpha^{2/3}\left[\theta_0^{-1/2} - \left(2\alpha + \theta_0\right)^{-1/2}\right]^{-2/3} - \theta_0 .$$

Inserting this value of $\theta_{rem}$ into the right hand term in our equation for $Y_{actual}$, we get that the maximum distance by which a pixel can be shifted is:

$$gap\left[\frac{\theta_0^{-1/2} - \sqrt[3]{\frac{1}{\alpha}}\sqrt[3]{\theta_0^{-1/2} - \left(2\alpha + \theta_0\right)^{-1/2}} - \frac{1}{2}\sqrt[3]{\frac{1}{\alpha}}\sqrt[3]{\theta_0^{-1/2} - \left(2\alpha + \theta_0\right)^{-1/2}}}{\theta_0^{-1/2} - \left(2\alpha + \theta_0\right)^{-1/2}} + \frac{\theta_0}{2\alpha}\right]$$

$$= gap\left[\frac{1 - \frac{3}{2}\sqrt[3]{\frac{\theta_0}{\alpha} - \frac{\theta_0}{\alpha}\left(\frac{2\alpha}{\theta_0} + 1\right)^{-1/2}}}{1 - \left(\frac{2\alpha}{\theta_0} + 1\right)^{-1/2}} + \frac{\theta_0}{2\alpha}\right]$$

**Figure 7** plots the maximum distortion (as a fraction of the height of the adjacent gap) versus ratio between the transition angle of the coating and the taper angle of the wedge. It shows that we can reduce aberration by increasing $\theta_0/\alpha$. We can increase $\theta_0/\alpha$ by designing the anti-reflection coating so that the transition between reflection and transmission at the glass/air interface takes place at an angle slightly less than the critical angle. If we assume that in the worst instance the gap is as big as the band itself and we want less than 10% peak-to-peak distortion, then the maximum gap fraction should be less than 20%, so $\theta_0$ should equal $\alpha$.

Suppose, for example, that we want to display 768 rows on a wedge tapering from 1.5 mm to 0.5 mm over a distance of 320 mm. The wedge angle is 0.18°, and the pixel size is 0.42 mm. At the thick end of the wedge the gap is 2.7 mm high, so the height of the band plus gap is 5.4 mm, so there are 13 pixels illuminated by a ray bundle spanning twice 0.18°; giving 0.028° per pixel. It follows that for less than 10% peak-to-peak distortion, the anti-reflection coating should reflect rays up to the critical angle minus 0.18°, then transfer from being reflective to being transmissive over a ray angle change of 0.028°. The angle between the coated wedge surface and the translucent screen should be 0.064°.

It can be difficult to design coatings which reflect light at some angles of incidence on the glass/air interface and not at others. This is particularly so when the light comes from a white source, so a further embodiment of the invention is described which uses coatings that are designed only to eliminate all reflection.

**Figure 8** shows how a prismatic film 5 is inserted between the wedge and the translucent screen. The prismatic film comprises a laminate of two transparent materials, the interface between which follows a saw-tooth contour in a direction parallel to that in which the wedge tapers, but is uniform in the orthogonal direction. The angle at the base and tip of each saw tooth should be 90°, but one side of each saw tooth should be perpendicular to light entering the film through the high-index side at that side's critical angle, which for most cases is approximately 45°. Such a film can for example be made by laminating the acrylic and polycarbonate form of 3M Scotch Optical Lighting film with the prismatic surfaces facing each other, or by coating 3M Scotch Optical Lighting film with a glue of a suitable refractive index.

As rays leave the wedge-shaped waveguide in Figure 8 their angle relative to the surface of the wedge is only a few degrees, so when they enter the high-index side of the prismatic film, they are refracted back close to the critical angle. It follows that the rays pass through the prismatic interface into the low-index side of the prismatic film with little change in direction, but the critical angle of this film is greater than the high-index side. Therefore when the rays are incident upon the material/air interface, the smallest difference between the incident angle of any ray and the critical angle is the difference in critical angles between the high-index and low-index materials. The difference between critical angles affects linearity in the same way as $\theta_0$ affects linearity in the anti-reflection coating, so for linearity better than 10%, the difference between critical angles should equal the wedge angle, $\alpha$. Suppose for example that we have an acrylic wedge with a wedge angle of 0.18° and want less than 10% distortion. The prismatic film can be made by coating the acrylic form of 3M's Scotch Optical Lighting Film on the prismatic side with a transparent glue such as that made for example by Norland Optical Adhesives, the glue being chosen to have a refractive index such that its critical angle to air is 0.18° lower than that of acrylic.

The techniques so far described are valid provided that all rays have the same component of direction when this is resolved in the plane of the tapered transparent slab.

WO 01/72037 describes how a video projector, flat projection slab 6 and cylindrical lens or mirror 7 can be used to collimate rays from the video projector into a single in-plane direction so that a magnified image from the video projector appears on the surface of the wedge. But it is difficult to get the focal length of a cylindrical lens shorter than its width unless one uses a Fresnel lens, and Fresnel lenses both scatter light and create image structure in the projected image. The length of the projection slab between projector and lens is therefore greater than the length of the wedge so it is desirable not only to fold the projection slab behind the wedge, but also to fold the projection slab itself in half.

WO 01/72037 further describes how a pair of right-angled prisms may be used to fold the images between two slabs, but the prisms must be made with considerable accuracy. If the sides of the projection slab are parallel then the projected rays may instead be folded by coating the end of the slab with metal and reflecting the projected rays off the end. However, the rays must then pass into the wedge and, with or without a fold, the slight kink between the parallel sides of the projection slab and the tapering sides of the wedge is enough to cause aberrations in the projected image.

These aberrations can be largely eliminated, as shown in **Figure 9**, by adiabatically curving one or both surfaces of the projection slab in the region 8 next to one of its ends so that the angle of taper at the end of the projection slab is the same as that of the wedge. The length of this region might be approximately thirty times its thickness in order for the curve to be adiabatic, though it is possible to achieve the desired end in less than that length.

It will now be explained how to calculate the radius of curvature and length of the transition section between flat input slab and tapered wedge. The transition must be gradual, since otherwise either a ghost image or distortion will be introduced, but it should be as short as possible because it forms a margin at the side of the screen.

If we consider rays travelling to the far end of the wedge then gradually reduce their angle of injection, they will at some point undergo one bounce more off the transition curve than before. The extra bounce will introduce extra focus, and the difference from before will be seen as distortion. To analyse this, unfold rays in both slab and wedge so that the only reflection shown is the extra bounce. There may be several other reflections in the transition of course, but it is only the effect of an increment in the number of reflections off the transition which interests us, so we will consider this increment in isolation.

The axis of the focusing mirror formed by the transition is approximately perpendicular to the slab, and the distance from the point of injection to the transition curve along this axis is the slab length, $L$, divided by the tangent of the angle of injection, $\theta$, as shown in **Figure 9a**. The transition forms a virtual image of the point of injection at a distance, $V$, whose reciprocal equals the reciprocal of $L/\tan\theta$ minus the reciprocal of twice the transition's radius of curvature:

$$\frac{1}{2r} = \frac{1}{L/\tan\theta} - \frac{1}{V}$$

so

$$V = \cfrac{1}{\cfrac{\tan\theta}{L} - \cfrac{1}{2r}}$$

$$\approx \frac{L}{\tan\theta}\left(1 + \frac{L}{2r\tan\theta}\right)$$

If the size of a pixel is $2(L/\tan\theta)\delta\theta$ without the curve, then with the curve the size is:

$$\left(V + L/\tan\theta\right)\delta\theta$$

so the distortion is:

$$\frac{L}{4r\tan\theta}.$$

The taper angle of a gapless wedge is approximately $\frac{1}{2}t_0/L$, and the length of transition curve needed to reach this taper angle is r times the taper angle, i.e. $\frac{1}{2}t_0/4d\tan\theta$, where d is the distortion. If the wedge has an initial thickness (i.e. at the thick end) of $t_0$=10 mm, 74° is the angle of injection to reach the tip of the wedge and a distortion of 1% is allowable, then the length of the transition curve is 36 mm.

Instead of a pair of prisms, as mentioned earlier, the fold between projection slab and wedge may be made either with the cylindrical equivalent of the lens described by J. Dyson in "Unit magnification optical system without Seidel aberrations", Journal of the Optical Society of America, Volume 49, page 713 (1959) or with a graded-index curve. The cylindrical equivalent of the Dyson lens can be made by placing a 15 mm diameter rod of acrylic in the centre of a cylinder with a 44.45 mm silvered internal diameter, then cutting both in half down their central axis, as shown in **Figure 10**. The projection slab and wedge are placed face to face with their ends at this central axis.

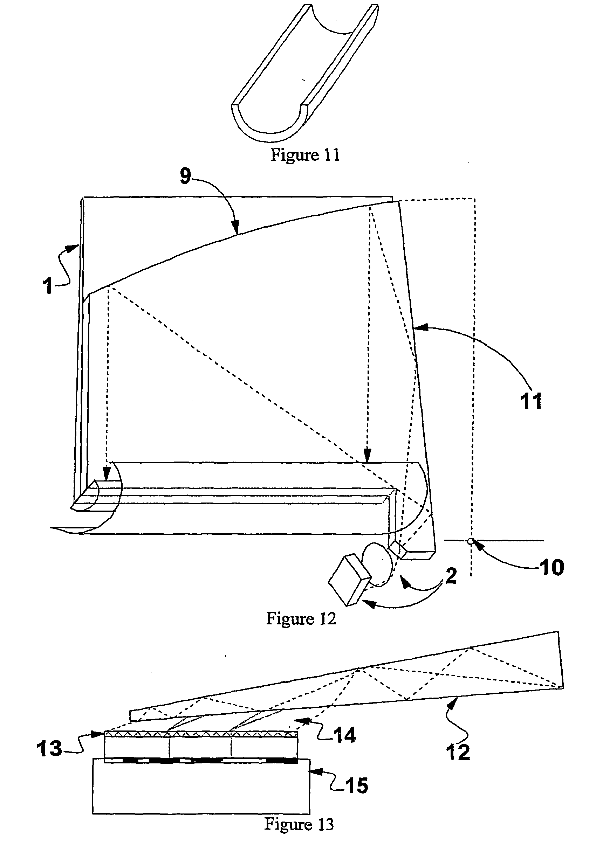

The graded-index curve comprises a cylinder which is the same thickness as the projection slab, but whose index increases towards its inner edge in such a way that the optical path length traced at any chosen radius from the centre, from one side of the half cylinder to the other, is the same. A graded-index curve can be made by passing the gaseous components of alternately high-index and low-index glass through a glass cylinder, and altering the ratios between the high and low-index forms in a suitable manner as these are deposited on the inner side of the glass cylinder. The graded-index curve should then be cut in half along its central axis (**Figure 11**), the projection or input slab butted to one end of the curve, and the thick end of the wedge butted to the other.

Instead of using a cylindrical lens to collimate rays from the video projector, one can, as shown in **Figure 12**, combine the actions of folding and collimation by cutting the unfolded end of the projection slab into a parabola 9, then polishing and silvering this end so that it acts as a cylindrical parabolic mirror. The focus 10 of the parabolic mirror should be off to one side of the projection slab and the video projector placed at this focus. The system can be made yet more compact if light from the video projector 2 is reflected off the side 11 of the projection slab before it goes on to be reflected off the parabola.

For example, if the wedge is 427 mm wide and 350 mm high, the bottom 30 mm being the adiabatic transition from constant thickness to tapering thickness, then the parabolic mirror could have the equation:

$$y = 0.000701x^2$$

where the origin x = 0, y = 0 is 110 mm beyond the side of the wedge, but folded back to the centre by cutting the edge of the projection slab 55 mm from the side of the wedge, and polishing and silvering it. This collimating system can be used with any flat-panel display, not just that shown in Figure 5, nor even just a tapered waveguide type.

It is expected that the manufacture of folding prisms will in due course be sufficiently precise to fold the projection slab to the wedge compactly, in which case it is desirable to eliminate all bulk by making the video projector itself flat.

This can be done, as shown in **Figure 13**, by removing the display element 15 from the video projector, be it a liquid-crystal display or otherwise, and placing the face of the display element against a small tapered transparent slab 12. A point source of light is injected into the thick end of the wedge and is collimated by a parabolic mirror, lens or holographic lens, for example. A holographic optical element 13 is inserted between the liquid-crystal display and wedge, with a wedge-shaped space 14 between the holographic optical element and wedge with dimensions chosen so that the holographic optical element is illuminated without gaps.

The spatial frequencies of the holographic optical element are arranged so that all rays are bent almost perpendicularly towards the face of the liquid-crystal display, which operates in reflection, so that the reflected rays are returned almost along their original path. The orientation of the display element 15 is adjusted so that the returned rays condense to a point adjacent to that at which they were injected, and a projection lens is inserted at the waist of the returning ray bundle. Then the rays are passed into the projection slab (not shown). The projection lens is preferably itself slim, and can for example be made by sandwiching lens-shaped sections of float glass between a pair of front-silvered mirrors. The transition from the injection wedge to the projection slab must be made adiabatic by gradually varying the angle of taper in the same way as for the display of the image. However, this projector system could be used with any display, not just the wedge type described in WO 01/72037.

In Figure 13 three bands are shown, and a wedge-shaped gap is formed between the tapered waveguide and the generally flat surface of the LCD modulator with its glass plate and hologram. However, if only one band of the emerging light is used there is no need for the dark-strip-eliminating system to be used and the gap 14 need not be tapered.

The source of illumination should also preferably be compact, and while laser diodes are sufficiently small, they have yet to reach the powers needed for video projection. The arc lights which are used instead are not small, and they also have the disadvantage of failing after one or two thousand hours and being difficult to replace. Preferably therefore the arc light should be housed separately, either in the computer driving the display or in a housing around the wall plug. Light from the arc should be condensed into an optical fibre, and this should be terminated at the point where light is to be injected into the display system.

An important advantage of projection is that the liquid-crystal display is small and it is easier to perform high-resolution lithography over small areas. If the transistor array underneath the liquid-crystal display is made out of a high-mobility semiconductor such as crystalline silicon then sophisticated algorithms such as. decompression may be done within the liquid-crystal display, and only a few, low-data-rate connectors are needed to drive the video image.

Some video projectors create colour images with the use of three liquid-crystal displays - one each for red, green and blue - and a pair of dichroic mirrors to combine the colour images. The same system may be used here by inserting dichroic mirrors into the projection slab and providing a liquid-crystal display and wedge at the focal point of the parabola for each colour. The two dichroic mirrors may be inserted by cutting the slab along one line for each mirror, depositing the mirror along one or other edge formed by the cut, then joining the projection slab back together again.

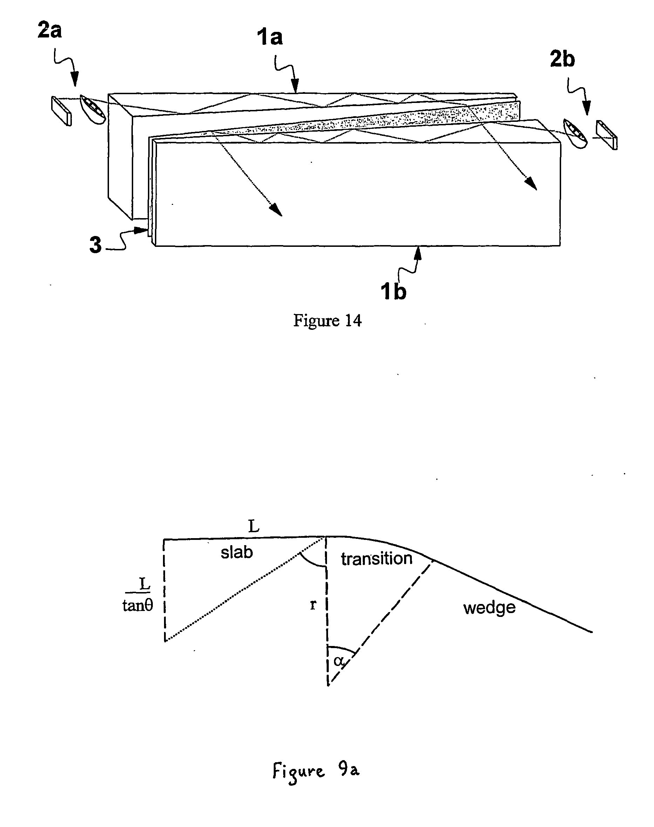

A compact screen can be made without folding by placing two wedges 1a, 1b tip to base, and condensing the light from two video projectors 2a, 2b into the thick ends of the wedges - see **Figure 14**. The facing surfaces of the two wedges are each covered in an anti-reflection coating, and a single translucent screen is inserted between them. Each wedge is spaced away from the anti-reflection coating so that the gaps between the image bands are eliminated. The left-hand half of the image is sent to the right-hand video projector, and the right-hand half of the image is sent to the left-hand video projector. Each half-image must be predistorted so as to correct keystone aberrations, and the two image halves should overlap at the centre, the transition from one half to the other being made gradual so as to eliminate any noticeable video transition. Of course, this system does use two projectors, which may be undesirable.

**Claims**

1. A flat-panel projection apparatus comprising a tapered transparent slab waveguide (1), a projector (2) adapted to inject images into the thick end of the slab so that rays from each point of the image are totally internally reflected and eventually emerge from one of the faces of the slab at a location dependent on their angle of injection into the end of the slab, a translucent screen (3) over the face of the tapered slab waveguide from which the display is to be viewed, the translucent screen being spaced by a gap from the tapered slab waveguide, the width of the gap at any point being proportional to the thickness of the tapered slab waveguide at that point, so that light emerging from the face of the tapered slab waveguide, in bands with gaps between them as a result of a difference in the number of internal reflections of rays from the same image point, can spread to close the gaps on the screen.

2. A flat-panel projection apparatus according to claim 1, in which the faces of the slab waveguide and screen are planar and the angle σ between the screen and the adjacent surface of the tapered waveguide approximately satisfies:

$$\sigma = \alpha \frac{2\sqrt{2}\left(n^2 - 1\right)^{-1/4}}{\dfrac{1}{\sqrt{\theta_0}} - \dfrac{1}{\sqrt{\theta_0 + 2\alpha}}}$$

where n is the refractive index of the tapered slab waveguide, $\alpha$ is the angle of taper of the slab, and $\theta_0$ is the angle by which a ray's incident angle must be less than the critical angle if it is to be substantially transmitted by the glass/air interface next to the translucent screen.

3. A flat-panel projection apparatus according to claim 1, in which the gap width s between waveguide and screen approximately satisfies:

$$s \approx 2t \frac{1}{\sqrt{n^2 - 1}} \left( \frac{1}{\sqrt{2\theta_0}\sqrt{n^2 - 1}} - \frac{1}{\sqrt{2(\theta_0 + \alpha)}\sqrt{n^2 - 1}} \right)^{-1}$$

where t is the thickness of the tapered waveguide at the point in question and the other quantities are as defined in claim 2.

4. A flat-panel projection apparatus according to any preceding claim, in which the slab is made of a material of refractive index of about 1.5 and has a taper angle of about 0.18°.

5. A flat-panel projection apparatus according to any preceding claim, in which the emitting surface of the tapered slab waveguide (1) has a prismatic sheet (5) for magnifying the angle of escape from the slab.

6. A flat-panel projection apparatus according to any preceding claim and including a flat input slab waveguide (6) into one end of which the light is input so as to be expanded over the width of this slab, the light emerging into the tapered waveguide slab from the input slab.

7. A flat-panel projection apparatus according to claim 6, in which the transition from the input waveguide (6) to the tapered waveguide (1) is gradual.

8. A flat-panel projection apparatus according to claim 6 or 7, in which the input waveguide has a collimating reflecting surface.

**Patentansprüche**

1. Flachtafel-Projektionseinrichtung, umfassend einen konischen durchsichtigen Bandwellenleiter (1), einen Projektor (2), der dafür ausgelegt ist, Bilder in das dicke Ende des Bands einzugeben, so dass Strahlen von jedem Punkt des Bilds intern totalreflektiert werden und schließlich aus einer der Flächen des Bands an einem Ort austreten, der von ihrem Eintrittswinkel in das Ende des Bands abhängt, einen durchsichtigen Schirm (3) über der Seite des konischen Bandwellenleiters, von der die Anzeige zu betrachten ist, wobei der durchsichtige Schirm durch einen Spalt Abstand zum konischen Bandwellenleiter hat, und die Breite des Spalts an jedem beliebigen Punkt proportional zur Dicke des konischen Bandwellenleiters an diesem Punkt ist, so dass Licht, das aus der Fläche des konischen Bandwellenleiters austritt, und zwar in Bändern mit Abständen dazwischen, die von einer unterschiedlichen Anzahl innerer Reflexionen der Strahlen von gleichen Bildpunkt herrühren, sich verbreitern kann und dadurch die Abstände auf dem Schirm schließt.

2. Flachtafel-Projektionseinrichtung nach Anspruch 1, worin die Flächen des Bandwellenleiters und des Schirms eben sind und der Winkel $\sigma$ zwischen dem Schirm und der benachbarten Oberfläche des konischen Wellenleiters ungefähr der Beziehung genügt:

$$\sigma = \alpha \frac{2\sqrt{2}\left(n^2 - 1\right)^{-1/4}}{\dfrac{1}{\sqrt{\theta_0}} - \dfrac{1}{\sqrt{\theta_0 + 2\alpha}}}$$

wobei n die Brechzahl des konischen Bandwellenleiters ist, $\alpha$ der Konuswinkel des Bands, und $\theta_0$ der Winkel ist, um den der Einfallswinkel eines Strahls kleiner sein muss als der kritische Winkel, wenn er im Wesentlichen durch die Glas/Luft-Grenze in der Nähe des durchsichtigen Schirms übertragen werden soll.

3. Flachtafel-Projektionseinrichtung nach Anspruch 1, worin die Spaltbreite s zwischen Wellenleiter und Schirm ungefähr der Beziehung genügt:

$$s \approx 2t \frac{1}{\sqrt{n^2 - 1}}\left(\frac{1}{\sqrt{2\theta_0}\sqrt{n^2 - 1}} - \frac{1}{\sqrt{2(\theta_0 + \alpha)}\sqrt{n^2 - 1}}\right)^{-1}$$

wobei t die Dicke des konischen Wellenleiters an dem entsprechenden Punkt bezeichnet und die anderen Größen den Angaben in Anspruch 2 entsprechen.

4. Flachtafel-Projektionseinrichtung nach irgendeinem vorhergehenden Anspruch, wobei das Band aus einem Material mit einer Brechzahl von ungefähr 1,5 hergestellt ist und einen Konuswinkel von ungefähr 0,18° aufweist.

5. Flachtafel-Projektionseinrichtung nach irgendeinem vorhergehenden Anspruch, wobei die Austrittsfläche des konischen Bandwellenleiters (1) eine Prismenlage (5) aufweist, die den Austrittswinkel aus dem Band vergrößert.

6. Flachtafel-Projektionseinrichtung nach irgendeinem vorhergehenden Anspruch, zudem enthaltend einen ebenen Eingabe-Bandwellenleiter (6), in dessen eines Ende das Licht eingegeben wird, damit es sich über die Breite dieses Bands ausdehnt und das Licht aus dem Eingabeband in den konischen Bandwellenleiter eintritt.

7. Flachtafel-Projektionseinrichtung nach Anspruch 6, wobei der Übergang vom Eingabewellenleiter (6) in den konischen Wellenleiter (1) allmählich erfolgt.

8. Flachtafel-Projektionseinrichtung nach Anspruch 6 oder 7, worin der Eingabewellenleiter eine parallel ausrichtende reflektierende Oberfläche hat.

**Revendications**

1. Appareil de projection à panneau plat comprenant un guide d'ondes sous forme de plaque transparente effilée (1), un projecteur (2) adapté pour injecter des images dans l'extrémité épaisse de la plaque de sorte que les rayons provenant de chaque point de l'image sont totalement réfléchis de façon interne et émergent finalement par l'une des faces de la plaque en un endroit qui dépend de leur angle d'injection dans l'extrémité de la plaque, un écran translucide (3) sur la face du guide d'ondes en forme de plaque effilée par laquelle l'affichage doit être vu, l'écran translucide étant séparé du guide d'ondes en forme de plaque effilée par un intervalle, la largeur de cet intervalle étant, en tout point, proportionnelle à l'épaisseur du guide d'ondes en forme de plaque effilée en ce point, de sorte que la lumière qui émerge de la face du guide d'ondes en forme de plaque effilée, dans des bandes avec des intervalles entre elles qui résultent d'une différence du nombre de réflexions internes des rayons provenant du même point d'image, peut s'étaler pour fermer les intervalles sur l'écran.

2. Appareil de projection à panneau plat selon la revendication 1, dans lequel les faces du guide d'ondes en forme de plaque et de l'écran sont planes et l'angle σ entre l'écran et la surface voisine du guide d'ondes effilé satisfait à peu près la relation :

$$\sigma = \alpha \frac{2\sqrt{2}\left(n^2 - 1\right)^{-1/4}}{\dfrac{1}{\sqrt{\theta_0}} - \dfrac{1}{\sqrt{\theta_0 + 2\alpha}}}$$

où n est l'indice de réfraction du guide d'ondes en forme de plaque effilée, $\alpha$ est l'angle d'effilement de la plaque et $\theta_0$ est l'angle dont l'angle d'incidence d'un rayon doit être inférieur à l'angle critique s'il doit être substantiellement transmis par l'interface verre/air près de l'écran translucide.

3. Appareil de projection à panneau plat selon la revendication 1, dans lequel la largeur s de l'intervalle entre le guide d'ondes et l'écran satisfait à peu près la relation :

$$s \approx 2t \frac{1}{\sqrt{n^2 - 1}} \left( \frac{1}{\sqrt{2\theta_0}\sqrt{n^2 - 1}} - \frac{1}{\sqrt{2(\theta_0 + \alpha)}\sqrt{n^2 - 1}} \right)^{-1}$$

où t est l'épaisseur du guide d'ondes effilé au point en question et où les autres quantités sont telles que définies dans la revendication 2.

4. Appareil de projection à panneau plat selon l'une quelconque des revendications précédentes, dans lequel la plaque est faite d'un matériau ayant un indice de réfraction égal à environ 1,5 et a un angle d'effilement d'environ 0,18°.

5. Appareil de projection à panneau plat selon l'une quelconque des revendications précédentes, dans lequel la surface d'émission du guide d'ondes en forme de plaque effilée (1) comporte une feuille prismatique (5) pour agrandir l'angle de sortie de la plaque.

6. Appareil de projection à panneau plat selon l'une quelconque des revendications précédentes et comprenant un guide d'ondes en forme de plaque à entrée plate (6) à une extrémité de laquelle on fait entrer la lumière afin de la dilater sur toute la largeur de cette plaque, la lumière émergeant de la plaque d'entrée pour entrer dans la plaque de guide d'ondes effilée.

7. Appareil de projection à panneau plat selon la revendication 6, dans lequel la transition du guide d'ondes d'entrée (6) au guide d'ondes effilé (1) est progressive.

8. Appareil de projection à panneau plat selon la revendication 6 ou 7, dans lequel le guide d'ondes d'entrée comporte une surface réfléchissante de collimation.

Figure 2

Figure 1

Figure 3

air

glass

$\delta\theta_2$

$\theta_c$

$\delta\theta_1$

Figure 4

Figure 5

Aberration at $\alpha=0.2^0$, $\theta_0=0.2^0$

Figure 6

15

Aberration versus $\theta_0/\alpha$

Figure 7

Figure 8

Figure 9

Figure 10

Figure 11

**9**

**1**

**11**

**10**

**2**

Figure 12

**13**

**14**

**12**

**15**

Figure 13

Figure 14

Figure 9a